# EUROPEAN PATENT APPLICATION

(11) **EP 4 572 332 A1**
(43) Date of publication of application: **18.06.2025**
(21) Application number: 24804719.3
(22) Date of filing: 21.10.2024
(51) Int. Cl.: H04R 1/34, H04R 1/02, H04R 1/28

(54) **ELECTRONIC DEVICE COMPRISING SPEAKER UNIT**

(30) Priority: 20.10.2023 KR 20230141236
(71) Applicant: Samsung Electronics Co., Ltd, Suwon-si, Gyeonggi-do 16677 (KR)
(72) Inventor: LEE, Seunghyuk, Suwon-si, Gyeonggi-do 16677 (KR); KIM, Sanguk, Suwon-si, Gyeonggi-do 16677 (KR); PARK, Taeyoung, Suwon-si, Gyeonggi-do 16677 (KR); LEE, Chanwoo, Suwon-si, Gyeonggi-do 16677 (KR); JEKAL, Ha, Suwon-si, Gyeonggi-do 16677 (KR); HAN, Kihyuk, Suwon-si, Gyeonggi-do 16677 (KR); HWANG, Ryuwon, Suwon-si, Gyeonggi-do 16677 (KR)
(74) Representative: HGF
(86) International application number: PCT/KR2024/016011
(87) International publication number: WO 2025/084879

(57) **Abstract**

According to an embodiment of the disclosure, an electronic device may include a housing positioned at a front surface thereof and including a first part made of a non-metallic material; a first support member disposed in the housing and including a first opening having at least a portion facing the first part; a speaker unit disposed in the housing and configured to face the first opening of the first support member; a sound hole formed in the housing to emit a sound output to the speaker unit; a first sealing member disposed between the first support member and the speaker unit and configured to enclose a sound emission port of the speaker unit and the first opening of the first support member; a first sound channel formed by being enclosed by the first sealing member and configured to connect the first opening and the speaker unit; and a second sound channel positioned between the first support member and the first part and configured to connect the first opening and the sound hole. **In** addition, various embodiments may be possible.

## Description

### [Technical Field]

Various embodiments disclosed in this document relate to an electronic device including a speaker unit.

### [Background Art]

A sound output module for reproducing a sound may be included in an electronic device. As more contents are gradually reproduced through electronic devices, users' interest in a sound performance is gradually increasing. That is, as electronic devices are used to output more content, users are becoming increasingly interested in the sound performance of the electronic device.

A sound hole for radiating a sound output from a speaker module to the outside of the electronic device may be designed at an aligned position at the center of the electronic device in consideration of design factors.

The above information may be provided as the related art for the purpose of aiding understanding of the disclosure. No claim or determination is made as to whether any of the foregoing contents may be applied as the prior art related to the disclosure.

### [Disclosure of Invention]

### [Technical Problem]

Various types of speakers for sound output may be disposed in electronic devices. The electronic device may include a sound channel for radiating a sound output from a front surface of the speaker to a sound hole communicated with the outside thereof. Further, the electronic device may include a resonance space in which a sound output from the speaker may resonate by sealing a rear surface of the speaker. The above-described sound channel, resonance space, and speaker may be modularized and disposed in the electronic device. For example, a speaker module in which a device object formed with the speaker, the sound channel, and the resonance space is formed as a set may be disposed in the electronic device. The sound channel and the resonance space may be formed through a step between the speaker and the device object.

Sound channel and resonance space conditions required according to a type of the electronic device may be different. That is, different types of electronic devices may have different sound channel and resonance space condition requirements. In this case, as a speaker module is newly produced based on the type of the electronic device, a production cost of the electronic device may increase.

Further, as slim-shaped electronic devices are preferred recently, it may be necessary to reduce the size, quantity or thickness of electronic components disposed inside the electronic device. Therefore, a method may be required in which only a speaker of speaker modules is disposed in the electronic device and in which a resonance space and a sound channel are formed through essential components disposed inside the electronic device.

According to an embodiment of the disclosure, only a speaker unit that performs a sound output function, rather than a speaker module type, may be disposed in the electronic device. That is, rather than containing an entire speaker module, the electronic device may contain just the speaker component which outputs sound. The other components within the electronic device may be arranged or configured to perform one or more of the functions which are typically performed by the other components of a traditional or typical speaker module. A sound output from the speaker unit may be transmitted to a sound hole through a sound channel formed through a housing and a device object disposed adjacent to the speaker unit. Further, the speaker unit may be positioned in a sealed resonance space formed through a printed circuit board and a bracket (e.g., shield can).

Technical problems to be achieved in this document are not limited to the above-described technical problems, and other technical problems not described will be clearly understood by those of ordinary skill in the art to which the disclosure belongs from the description below.

### [Solution to Problem]

According to an embodiment of the disclosure, an electronic device may include a housing positioned at a front surface thereof and including a first part made of a non-metallic material; a first support member disposed in the housing and including a first opening having at least a portion facing the first part; a speaker unit disposed in the housing and configured to face the first opening of the first support member; a sound hole formed in the housing to emit a sound output to the speaker unit; a first sealing member disposed between the first support member and the speaker unit and configured to enclose a sound emission port of the speaker unit and the first opening of the first support member; a first sound channel formed by being enclosed by the first sealing member and configured to connect the first opening and the speaker unit; and a second sound channel positioned between the first support member and the first part and configured to connect the first opening and the sound hole.

According to an embodiment of the disclosure, a speaker structure disposed in a housing of an electronic device may include a first support member positioned at a front surface of the electronic device and including a first opening facing a first part of the housing made of a non-metallic material; a speaker unit configured to face the first opening of the first support member; a first sealing member disposed between the first support member and the speaker unit and configured to enclose a sound emission port of the speaker unit and the first opening of the first support member; a first sound channel formed by being enclosed by the first sealing member and configured to connect the first opening and the speaker unit; and a second sound channel positioned between the first support member and the first part and configured to connect the first opening and a sound hole formed in the housing.

### [Advantageous Effects of Invention]

According to an embodiment of the disclosure, the speaker unit can be positioned in an injection area of the housing. In the case that the speaker unit is disposed in the injection area of the housing, a first support member 450 and a separate support member is disposed between the injection area and the speaker unit, thereby securing a sound channel that transmits a sound output from the speaker unit to the sound hole communicated with the outside of the electronic device. For example, the sound channel may be a space formed as the support members are spaced apart from each other at regular intervals with respect to the injection area of the housing.

Further, in an embodiment, the speaker unit can be disposed inside a sealed resonance space through the printed circuit board and the bracket (e.g., shield can). The speaker unit may improve sound flatness and sound quality in a low range by securing a resonance space. Further, as the resonance space is secured through components disposed inside the electronic device, as in the printed circuit board and the bracket, a separate device object (e.g., speaker housing) for forming the resonance space is not required; thus, a production cost of the electronic device may be saved.

Further, in an embodiment, the electronic device can secure a stereo performance and a predetermined level of sound performance by disposing speaker units at the upper end and lower end, respectively.

Effects that can be obtained from the disclosure are not limited to the above-described effects, and other effects not described will be clearly understood by those of ordinary skill in the art to which the disclosure belongs from the description below.

### [Brief Description of Drawings]

In relation to the description of the drawings, identical or similar reference numerals may be used for identical or similar components.
FIG. 1 is a block diagram illustrating an electronic device in a network environment according to various embodiments of the disclosure.
FIG. 2A is a perspective view illustrating a front surface of an electronic device according to an embodiment of the disclosure.
FIG. 2B is a perspective view illustrating a rear surface of the electronic device of FIG. 2A according to an embodiment of the disclosure.
FIG. 3 is an exploded perspective view illustrating the electronic device of FIG. 2A according to an embodiment of the disclosure.
FIG. 4 is a diagram illustrating a portion of an electronic device according to an embodiment disclosed in this document.
FIG. 5A is a diagram illustrating a housing of an electronic device viewed from a front surface of the electronic device according to an embodiment disclosed in this document.
FIG. 5B is a diagram illustrating a housing of an electronic device viewed from a rear surface of the electronic device according to an embodiment disclosed in this document.
FIG. 6 is a cross-sectional view taken along line A-A of FIG. 2A according to an embodiment of the disclosure.
FIG. 7A is a diagram illustrating a seating groove in which a first part, a second part, and a first support member of a housing are seated and viewed from a rear surface of the electronic device according to an embodiment of the disclosure.
FIG. 7B is a top plan view illustrating a first support member according to an embodiment of the disclosure.
FIG. 7C is a diagram illustrating a first support member disposed in a seating groove of FIG. 7A.
FIG. 8A is a top plan view illustrating a second support member according to an embodiment of the disclosure.
FIG. 8B is a diagram illustrating a second support member disposed in a portion of the first support member illustrated in FIG. 7C.
FIG. 9A is a top plan view illustrating a second sealing member according to an embodiment of the disclosure.
FIG. 9B is a diagram illustrating a second sealing member disposed in a portion of the second support member illustrated in FIG. 8B.
FIG. 9C is a diagram illustrating a speaker unit disposed in a housing so as to face a first opening of a first support member illustrated in FIG. 9B.

### [Mode for the Invention]

In the following description, various embodiments of this document are described with reference to the attached drawings. It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

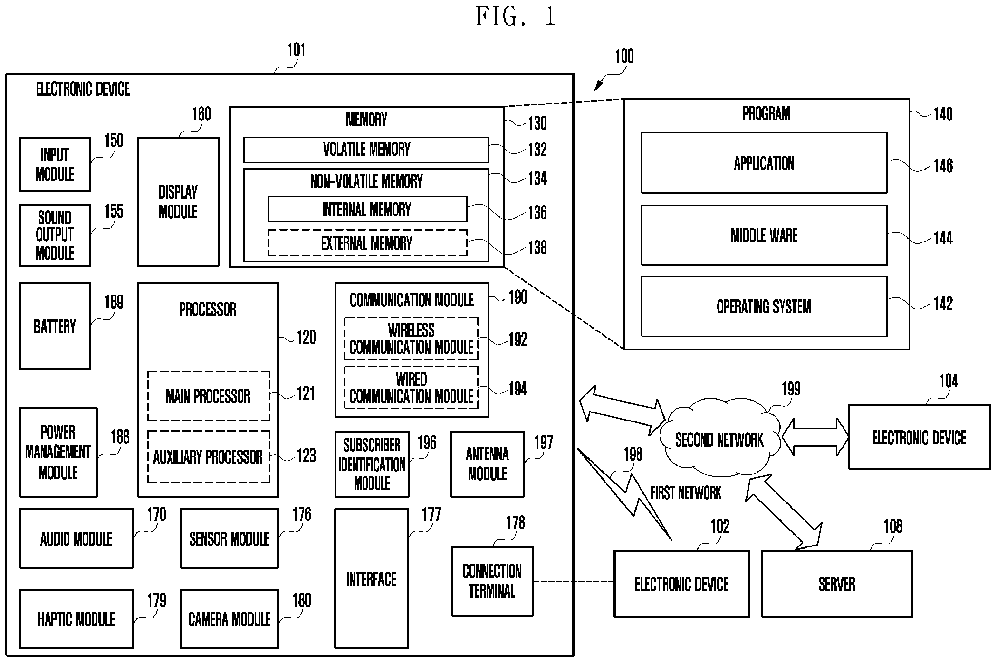

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

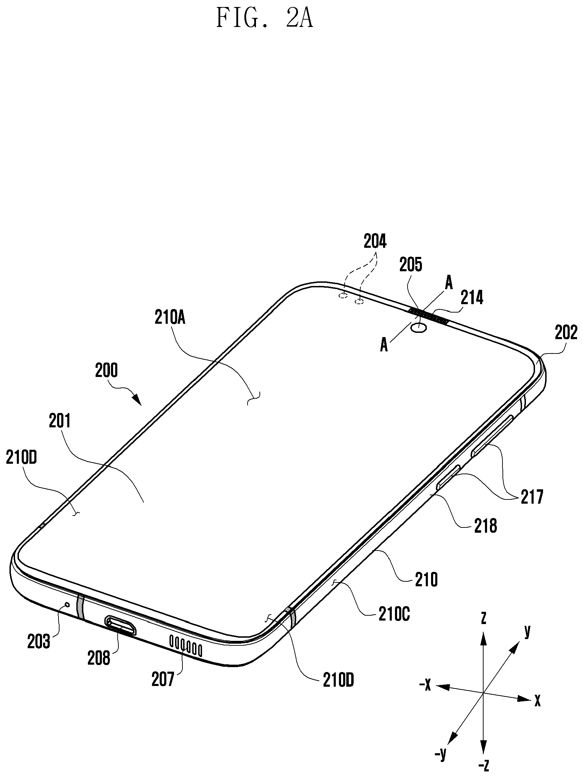

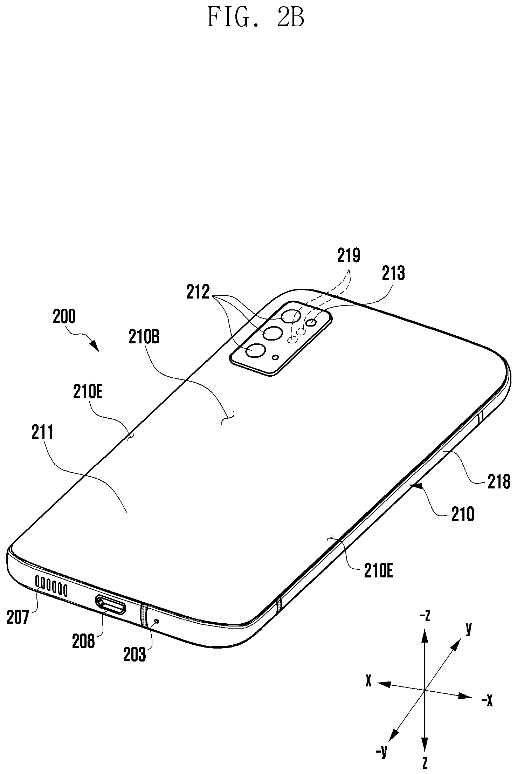

FIG. 2A is a front perspective view of an electronic device according to various embodiments of the disclosure. FIG. 2B is a rear perspective view of the electronic device of FIG. 2A according to various embodiments of the disclosure.

The electronic device 200 to be described below may include at least one of the components of the electronic device 101 described above with reference to FIG. 1.

With reference to FIG. 2A and FIG. 2B, the electronic device 200 according to an embodiment may include a housing 210 that includes a first surface (or front surface) 210A, a second surface (or rear surface) 210B, and a side surface 210C surrounding a space between the first surface 210A and the second surface 210B. According to an embodiment (not shown), the housing 210 may refer to a structure forming a part of the first surface 210A, the second surface 210B, and the side surface 210C in FIG. 2A. According to an embodiment, the first surface 210A may be formed by a front plate 202 (e.g., glass plate or polymer plate including various coating layers) where at least a portion of the front plate is substantially transparent. The second surface 210B may be formed by a rear plate 211 that is substantially opaque. The rear plate 211 may be formed by, for example, coated or tinted glass, ceramic, polymer, metal (e.g., aluminum, stainless steel (STS), or magnesium), or a combination of at least two thereof. The side surface 210C may be formed by a side bezel structure (or "side member") 218 coupled to the front plate 202 and the rear plate 211 and including a metal and/or a polymer. In a certain embodiment, the rear plate 211 and side bezel structure 218 may be integrally formed and include (i.e. be made from, comprise etc) the same material (e.g., metal material such as aluminum).

In the illustrated embodiment, the front plate 202 may include a first region 210D that is curved and seamlessly extended from the first surface 210A toward the rear plate at opposite ends of the longer edge of the front plate 202. In the illustrated embodiment (see FIG. 2B), the rear plate 211 may include a second region 210E that is curved and seamlessly extended from the second surface 210B toward the front plate 202 respectively at opposite ends of the longer edge. In a certain embodiment, the front plate 202 or the rear plate 211 may include only one of the first region 210D and the second region 210E. In a certain embodiment, the front plate 202 may not include the first region and the second region, but may include only a flat surface disposed parallel to the second surface 210B. In the above embodiments, when the electronic device is viewed from the side thereof, the side bezel structure 218 may have a first thickness (or width) on a side where the first region 210D or the second region 210E is not included, and may have a second thickness thinner than the first thickness on a side where the first region 210D or the second region 210E is included.

According to an embodiment, the electronic device 200 may include at least one or more of a display 201, input device 203, sound output devices 207 and 214, sensor modules 204 and 219, camera modules 205 and 212, key input device 217, indicator (not shown), or connector 208. In certain embodiments, at least one of the elements (e.g., key input device 217 or indicator) may be omitted from the electronic device 200, or another element may be added to the electronic device 200.

The display 201 may be exposed, for example, through a significant portion of the front plate 202. In a certain embodiment, at least a portion of the display 201 may be exposed through the front plate 202 forming the first surface 210A and the first region 210D of the side surface 210C. The display 201 may be coupled to or disposed adjacent to a touch sensing circuit, a pressure sensor capable of measuring the intensity (pressure) of a touch, and/or a digitizer that detects a magnetic field type stylus pen. In a certain embodiment, at least some of the sensor modules 204 and 219, and/or at least some of the key input devices 217 may be disposed on the first region 210D and/or the second region 210E.

The input device 203 may include a microphone 203. In a certain embodiment, the input device 203 may include a plurality of microphones 203 arranged to detect the direction of a sound. The sound output devices 207 and 214 may include speakers 207 and 214. The speakers 207 and 214 may include an external speaker 207 and a call receiver 214. In a certain embodiment, the microphone 203, the speakers 207 and 214, and the connector 208 may be at least partially disposed in the internal space of the electronic device 200, and may be exposed to the external environment through at least one hole formed in the housing 210. In a certain embodiment, the hole formed in the housing 210 may be commonly used for the microphone 203 and the speakers 207 and 214. In a certain embodiment, the sound output devices 207 and 214 may include a speaker (e.g., piezo speaker) that operates in isolation from the hole formed in the housing 210.

The sensor modules 204 and 219 may generate an electrical signal or a data value corresponding to an internal operating state of the electronic device 200 or an external environmental state. The sensor modules 204 and 219 may include, for example, a first sensor module 204 (e.g., proximity sensor) and/or a second sensor module (not shown) (e.g., fingerprint sensor) disposed on the first surface 210A of the housing 210, and/or a third sensor module 219 (e.g., HRM(heart rate monitor) sensor) disposed on the second surface 210B of the housing 210. The fingerprint sensor may be disposed on the first surface 210A (e.g., home key button) of the housing 210, on a portion of the second surface 210B, and/or under the display 201. The electronic device 200 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 205 and 212 may include a first camera module 205 disposed on the first surface 210A of the electronic device 200, a second camera module 212 disposed on the second surface 210B, and/or a flash 213. The camera modules 205 and 212 may include one or plural lenses, an image sensor, and/or an image signal processor. The flash 213 may include, for example, a light emitting diode or a xenon lamp. In a certain embodiment, two or more lenses (wide-angle lens, ultra-wide-angle lens, or telephoto lens) and image sensors may be arranged in one surface of the electronic device 200.

The key input devices 217 may be arranged in the side surface 210C of the housing 210. According to an embodiment, the electronic device 200 may not include some or all of the above-mentioned key input devices 217, and a key input device 217 not included may be implemented on the display 201 in a different form such as a soft key. According to an embodiment, the key input devices 217 may be implemented using a pressure sensor included in the display 201.

The indicator may be disposed on, for example, the first surface 210A of the housing 210. The indicator may provide, for example, state information of the electronic device 200 in a light form (e.g., light emitting element). According to an embodiment, the light emitting element may provide a light source interacting with, for example, the operation of the camera module 205. The indicator may include, for example, an LED(light emitting diode), an IR(infrared) LED, and/or a xenon lamp.

The connector holes 208 may include a first connector hole 208 capable of accepting a connector (e.g., universal serial bus (USB) connector) for transmitting and receiving power and/or data to and from an external electronic device, and/or a second connector hole (e.g., earphone jack) (not shown) capable of accepting a connector for transmitting and receiving an audio signal to and from an external electronic device.

Some of the camera modules 205 and 212, some of the sensor modules 204 and 219, or the indicator may be disposed to be exposed through the display 201. For example, the camera module 205, the sensor module 204, or the indicator may be arranged in the internal space of the electronic device 200 so as to be in contact with the external environment through an opening of the display 201 perforated up to the front plate 202 or a transmissive region. According to an embodiment, the region in which the display 201 and the camera module 205 face each other may be formed as a transmissive region having a preset transmittance as a part of the content display area. According to an embodiment, the transmissive region may be formed to have a transmittance in a range of about 5 percent to about 20 percent. This transmissive region may include a region overlapping an effective area (e.g., angle-of-view area) of the camera module 205 through which light passes for image generation with an image formed by an image sensor. For example, the transmissive region of the display 201 may include a region having a lower pixel density than surrounding regions. For example, the transmissive region may replace the opening. For example, the camera module 205 may include an under display camera (UDC). According to an embodiment, a certain sensor module 204 may be disposed in the internal space of the electronic device so as to perform its function without being visually exposed through the front plate 202. For example, in this case, the region of the display 201 facing the sensor module may not need a perforated opening.

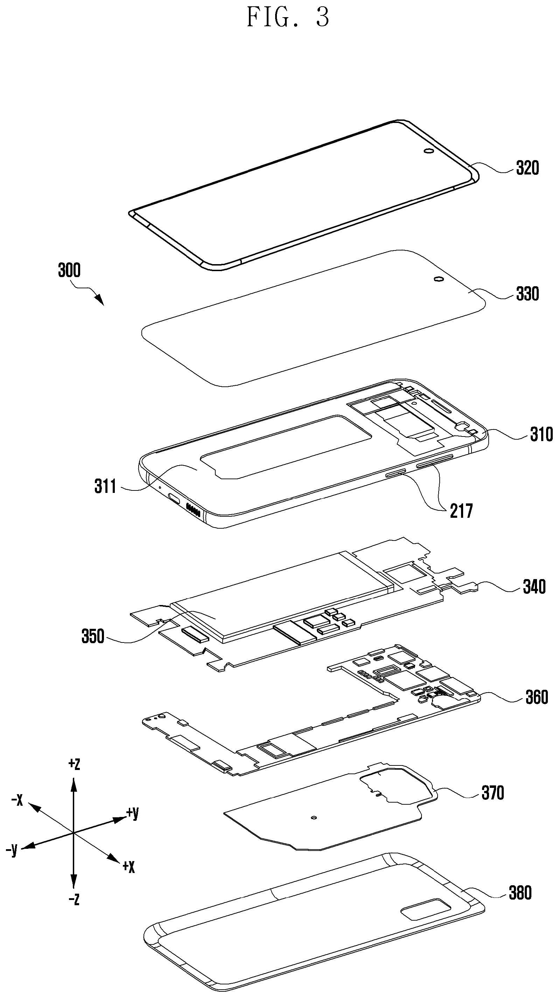

According to an embodiment, an electronic device 200 has a bar type or plate type appearance, but the disclosure is not limited thereto. For example, the illustrated electronic device 200 may be part of a foldable electronic device, a slideable electronic device, a stretchable electronic device, and/or a rollable electronic device. The "foldable electronic device", the "slidable electronic device", the "stretchable electronic device" and/or the "rollable electronic device" may mean an electronic device in which at least a portion of the display is folded, wound or rolled, in which an area of the display is at least partially expanded, and/or in which the display may be received inside the housing (e.g., the housing 210 of FIGS. 2A and 2B) because the display (e.g., a display 330 of FIG. 3) may be bent. The foldable electronic device, the slideable electronic device, the stretchable electronic device, and/or the rollable electronic device may expand and use a screen display area by unfolding the display or exposing a larger area of the display to the outside according to the user's needs.

FIG. 3 is an exploded perspective view of the electronic device 200 of FIG. 2A according to various embodiments of the disclosure.

The electronic device 300 of FIG. 3 may be at least partially similar to the electronic device 200 of FIGS. 2A and 2B, or may include other embodiments of an electronic device.

With reference to FIG. 3, the electronic device 300 (e.g., electronic device 200 in FIG. 2A or 2B) may include a side member 310 (e.g., side bezel structure), a first support member 311 (e.g., bracket or support structure), a front plate 320 (e.g., front cover)(e.g., front plate 202 in FIG. 2A), a display 330 (e.g., display 201 in FIG. 2A), a board 340 (e.g., printed circuit board (PCB), flexible PCB (FPCB), or rigid-flexible PCB (RFPCB)), a battery 350, a second support member 360 (e.g., rear case), an antenna 370, and a rear plate 380 (e.g., rear cover)( e.g., rear plate 211 in FIG. 2B). In a certain embodiment, at least one of the components (e.g., first support member 311 or second support member 360) may be omitted from the electronic device 300 or other components may be additionally included therein. At least one of the components of the electronic device 300 may be the same as or similar to at least one of the components of the electronic device 200 of FIG. 2A or 2B, and repeated descriptions will be omitted below.

The first support member 311 may be disposed inside the electronic device 300 and may be connected to the side member 310 or may be integrally formed with the side member 310. The first support member 311 may be made of, for example, a metal material and/or a non-metal (e.g., polymer) material. The first support member 311 may have one surface coupled to the display 330 and the other surface coupled to the board 340. A processor (e.g., processor 120 in FIG. 1), a memory (e.g., memory 130 in FIG. 1), and/or an interface (e.g., interface 177 in FIG. 1) may be mounted on the board 340. The processor may include, for example, one or more of a central processing unit, an application processor, a graphics processing unit, an image signal processor, a sensor hub processor, and a communication processor.

The memory may include, for example, a volatile memory or a non-volatile memory.

The interface may include, for example, a high definition multimedia interface (HDMI), a universal serial bus (USB) interface, an SD (secure digital) card interface, and/or an audio interface. The interface may, for example, electrically or physically connect the electronic device 300 to an external electronic device, and may include a USB connector, an SD card/MMC (multimedia card) connector, or an audio connector.

The battery 350 is a device for supplying power to at least one component of the electronic device 300, and may include, for example, a non-rechargeable primary cell, a rechargeable secondary cell, or a fuel cell. At least a portion of the battery 350 may be disposed substantially coplanar with the board 340, for example. The battery 350 may be integrally disposed inside the electronic device 300. According to an embodiment, the battery 350 may be disposed attachably and detachably with the electronic device 300 (i.e. fixed or removable).

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging. According to an embodiment, an antenna structure may be formed by a part of the side bezel structure 310 and/or the first support member 311 or a combination thereof.

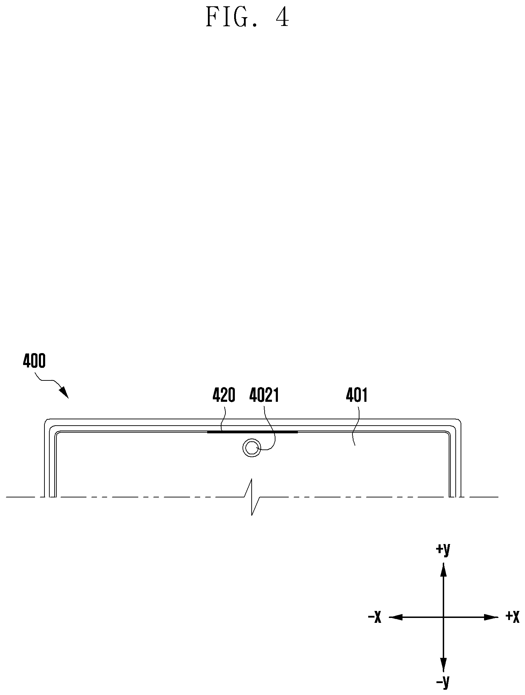

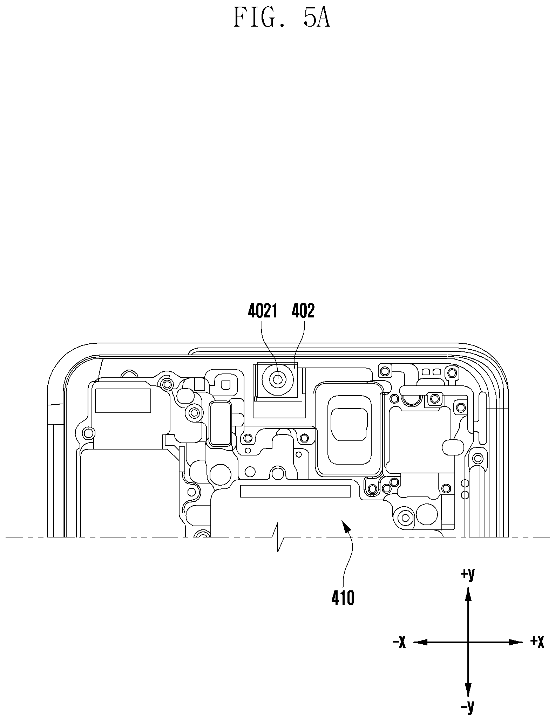

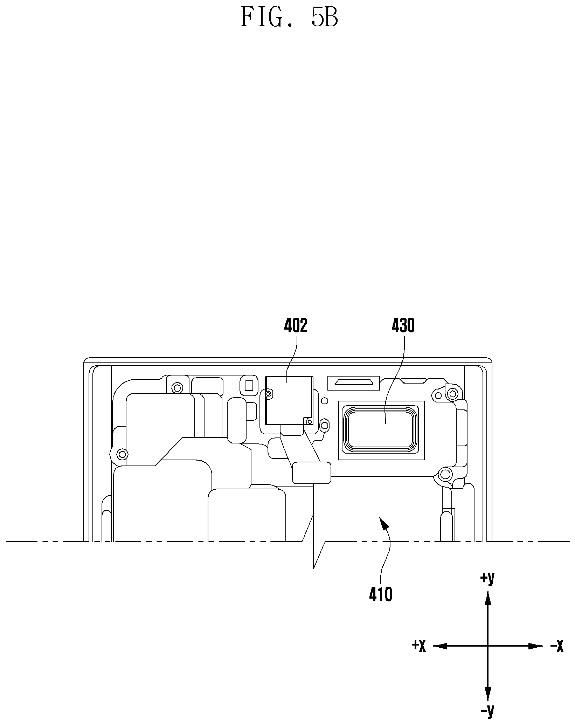

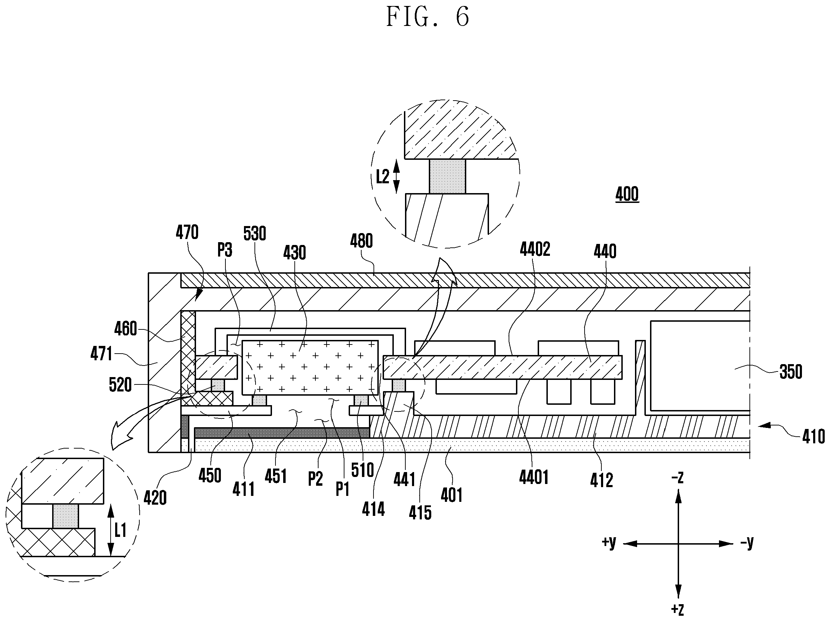

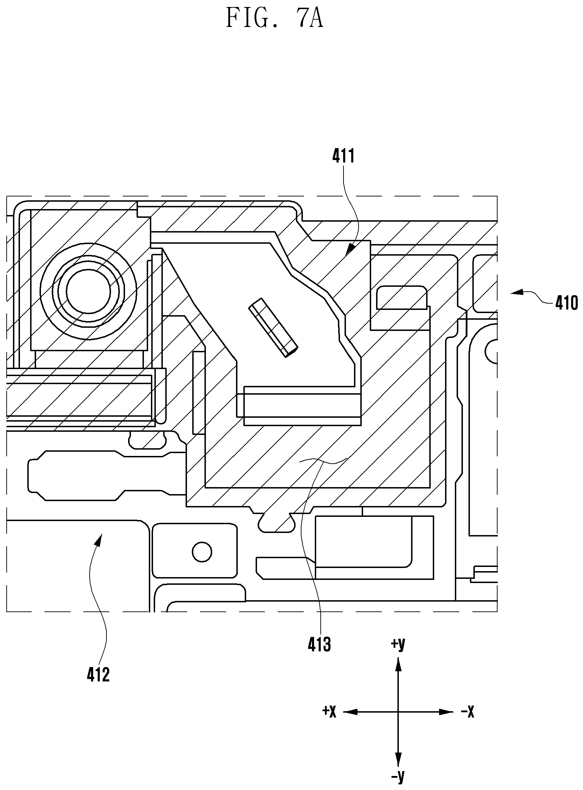

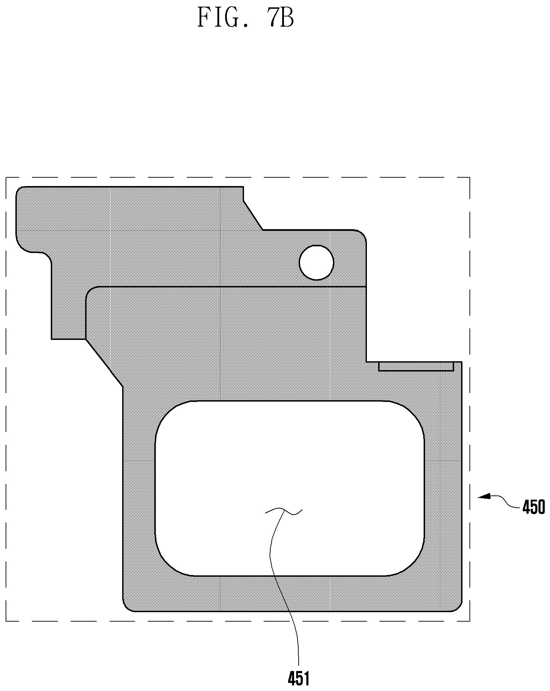

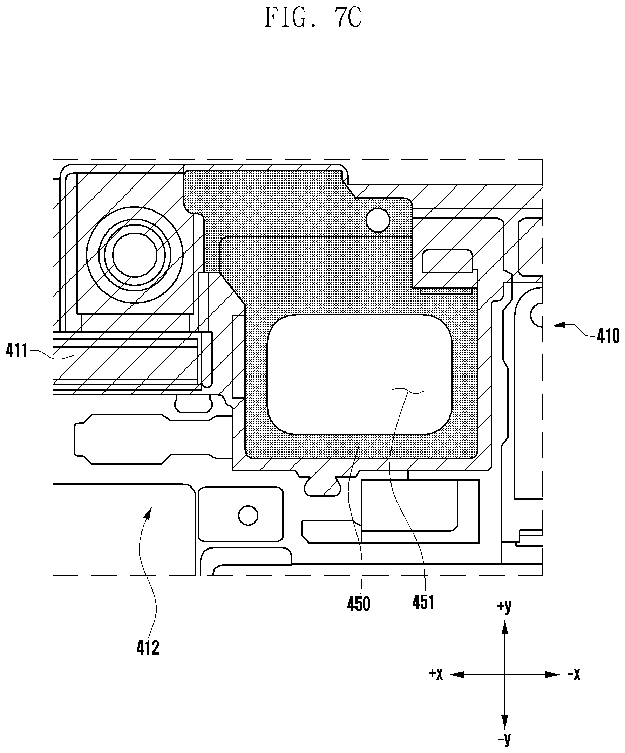

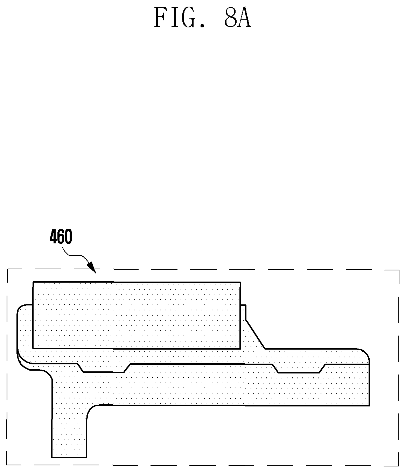

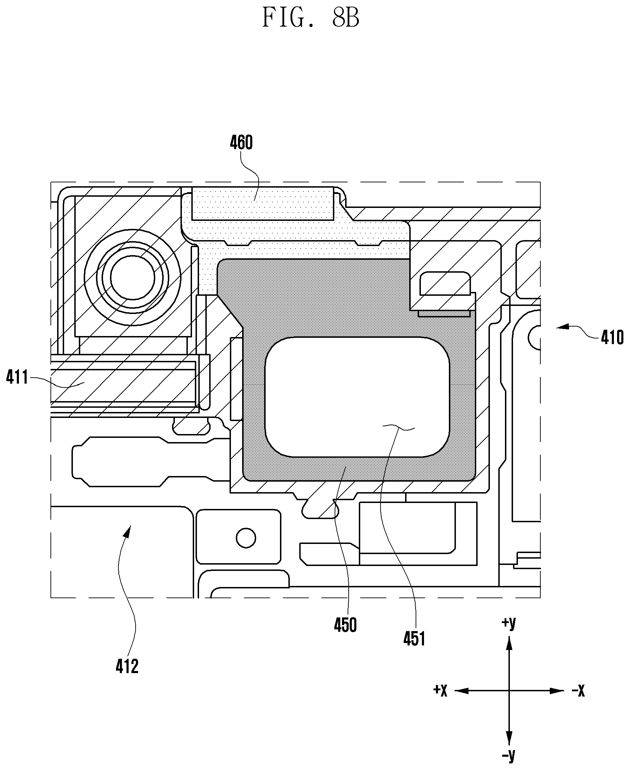

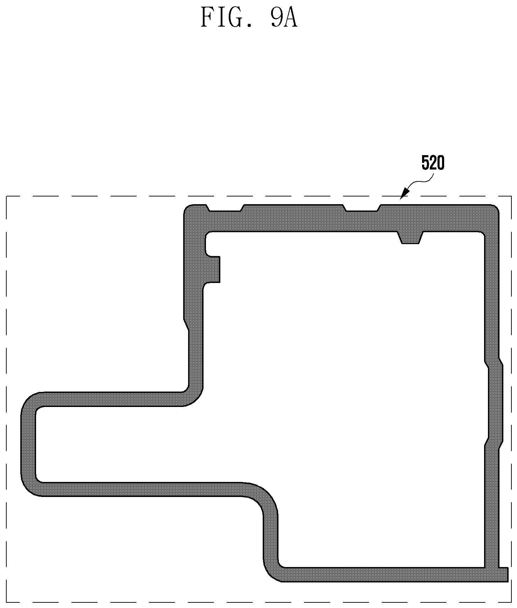

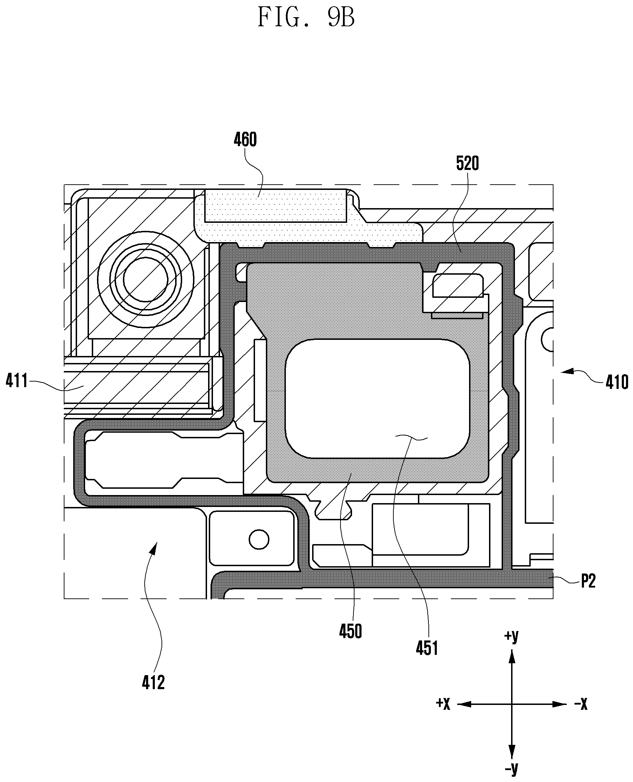

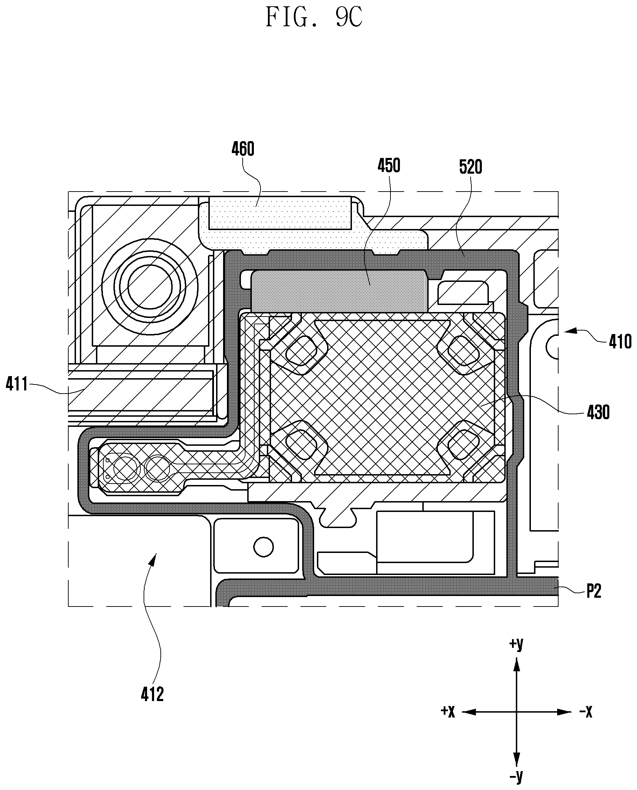

FIG. 4 is a diagram illustrating a portion of an electronic device according to an embodiment disclosed in this document. FIG. 5A is a diagram illustrating a housing of an electronic device viewed from a front surface of the electronic device according to an embodiment disclosed in this document. FIG. 5B is a diagram illustrating a housing of an electronic device viewed from a rear surface of the electronic device according to an embodiment disclosed in this document. FIG. 6 is a cross-sectional view taken along line A-A of FIG. 2A according to an embodiment of the disclosure. FIG. 7A is a diagram illustrating a seating groove in which a first part, a second part, and a first support member of a housing are seated and viewed from a rear surface of the electronic device according to an embodiment of the disclosure. FIG. 7B is a top plan view illustrating a first support member according to an embodiment of the disclosure. FIG. 7C is a diagram illustrating a first support member disposed in a seating groove of FIG. 7A. FIG. 8A is a top plan view illustrating a second support member according to an embodiment of the disclosure. FIG. 8B is a diagram illustrating a second support member disposed in a portion of the first support member illustrated in FIG. 7C. FIG. 9A is a top plan view illustrating a second sealing member according to an embodiment of the disclosure. FIG. 9B is a diagram illustrating a second sealing member disposed in a portion of the second support member illustrated in FIG. 8B. FIG. 9C is a diagram illustrating a speaker unit disposed in a housing so as to face a first opening of a first support member illustrated in FIG. 9B.

In an embodiment disclosed in this document, an electronic device 400 illustrated in FIG. 4 may be an example of the electronic device 101 illustrated in FIG. 1, the electronic device 200 illustrated in FIGS. 2A and 2B, and/or the electronic device 300 illustrated in FIG. 3. The electronic device 400 described below is described based on a bar-shaped electronic device illustrated in FIGS. 2A, 2B, and 3, but in some embodiments, the electronic device 400 may be part of a foldable electronic device, a slideable electronic device, a stretchable electronic device, and/or a rollable electronic device. Further, the same member numbers are used for all components that are the same or similar to those described in FIGS. 1, 2A, 2B, and 3, except for the case of being indicated separately.

According to an embodiment, the electronic device may support various device objects and electrical objects constituting the electronic device 400, and include a housing 410 (e.g., the housing 210 of FIG. 2A) wherein at least a portion of the housing 410 constitutes (i.e. forms part of) an appearance (e.g., the side bezel structure 218 of FIG. 2A) of the electronic device 400. Here, the electrical objects may be understood as a general term for components that transmit or receive electrical signals. The housing 410 may be composed of a single component or may be composed by coupling a plurality of components. For example, the housing 410 may include a device object (e.g., a second part 412) made of a metal material and a non-metallic device object (e.g., a first part 411) coupled with the device object made of a metal material through an injection process.

In an embodiment, the housing 410 may be made of various materials. For example, the housing 410 may include a first part 411 made of a non-metallic material and/or a second part 412 made of a metallic material. In an embodiment, the first part 411 is made of a non-metallic material and may be a concept referring to a device object constituting the housing 410. The second part 412 is made of a metal material and may be a concept referring to a device object constituting the housing 410. In an embodiment, the first part 411 may be coupled to the second part 412 made of a metal material through an injection process. In an embodiment, the metal material may include an alloy of aluminum, stainless steel (STS, SUS), iron, magnesium, and/or titanium. The non-metallic material may include a synthetic resin, ceramic, and/or engineering plastic.

In an embodiment, with reference to FIGS. 4 and 5A, a camera module 403 may be disposed so that a lens unit 4031 of the camera module 403 (e.g., the camera module 180 of FIG. 1) is aligned with the center of a width direction (e.g., the X-axis direction of FIG. 5A) of the housing 410. With reference to FIG. 4, the display 401 (e.g., the display module 160 of FIG. 1, the display 201 of FIG. 2A, and the display 330 of FIG. 3) may include a camera hole 403 facing the lens unit 4031 of the camera module 403. The camera hole 403 may be a portion in which external light passes through the camera module 403 and enters the lens unit 4031 of the camera module 403. At least a portion of a portion corresponding to the camera hole 403 may be transparent.

According to an embodiment, as illustrated in FIGS. 5A and 5B, in the housing 410 of the electronic device 400, a speaker unit 430 (e.g., the sound output module 155 of FIG. 1 and/or the sound output device 214 of FIG. 2A) may be disposed. In an embodiment, with reference to FIGS. 5A and 5B, the speaker unit 430 may be disposed at an upper end (e.g., a portion positioned in the +Y direction based on FIG. 5A) of a housing 410. In an embodiment, a speaker unit 430 may mean a component that outputs a sound according to a command from the processor 120 when an application is executed. In an embodiment, the speaker unit 430 may include a speaker that outputs a sound and/or a receiver that outputs a call sound when an application is running. In an embodiment, the speaker unit 430 may output a receiver sound, which is a call sound, when making a call, and output a speaker sound when operating an application such as a video or a game.

In an embodiment, another speaker unit (e.g., the sound output device 207 of FIG. 2A) may be disposed at a lower end (e.g., a portion positioned in the -Y direction based on FIG. 2A) of the housing 410. The electronic device 400 of the disclosure may provide a synesthetic sound to a user by securing a stereo performance through speaker units 430 disposed at the upper end and lower end, respectively.

With reference to FIG. 5B, in various embodiments disclosed in this document, the speaker unit 430 of the electronic device 400 may be disposed in a first direction (e.g., -X direction in FIGS. 5B and 6A) with respect to the camera module 403. In the case that the lens unit 4031 of the camera module 403 is disposed to be aligned with the center in a width direction of the housing 410, the speaker unit 430 may be disposed eccentrically (i.e. offset) with respect to the center in the width direction of the housing 410.

In an embodiment, with reference to FIGS. 4 and 6, the electronic device 400 may include a sound hole 420 (e.g., the sound hole 214 of FIG. 2A) for connecting the outside thereof and an inner space thereof. The sound hole 420 may include a slit-shaped groove positioned between the housing 410 and the display 401. For example, the sound hole 420 may be a slit-shaped hole positioned between the display 401 and a side member 310 of the housing 410 or a side wall part 471 of a rear case 470 (e.g., a second support member 360 of FIG. 3). In an embodiment, the slit-shaped sound hole 420 may be formed to extend in a predetermined direction (e.g., the X-axis direction in FIG. 4). For example, a plurality of holes constituting the sound hole 420 may be arranged in a direction parallel to the width direction of the electronic device 400. In an embodiment, at least a portion of the housing 410 and the display 401 may be concave to form the slit-shaped sound hole 420. In some cases, the slit-shaped sound hole 420 may be provided by a step formed between the housing 410 and the display 401. In an embodiment, the sound hole 420 may be formed in the first part 411 of the housing 410 and face a front surface (e.g., a surface facing the +Z direction based on FIG. 6) of the electronic device 400. In an embodiment, the sound hole 420 may be formed in the display 401. For example, the sound hole 420 may be formed at the upper end of the display 401 so that a sound output from the speaker unit 430 may be emitted to the outside of the electronic device 400.

In an embodiment, the center of the sound hole 420 in the width direction (e.g., the X-axis direction in FIG. 4) may be positioned to be aligned with the camera hole 403. In other words, the sound hole 420 may be formed symmetrically with respect to the camera hole 403. Because the camera hole 403 may be aligned with the center of the housing 410, the sound hole 420 aligned with the camera hole 403 may be aligned with the center of the housing 410.

In an embodiment, in order to prevent an external foreign matter from entering through the sound hole 420, a foreign matter prevention member (not illustrated) including a mesh may be disposed in the sound hole 420. The foreign matter prevention member may be disposed at an entrance portion of the sound hole 420 or inside the sound hole 420.

According to an embodiment disclosed in this document, a sound radiated from the speaker unit 430 may be emitted to the outside of the electronic device 400 through a sound space (e.g., a first sound channel P1, a second sound channel P2, and a rear sound space P3) formed through the housing 410 and/or a device object (e.g., a first support member 450, a second support member 460, a first sealing member 510, a second sealing member 520, and a printed circuit board 440 (e.g., a substrate 340 and/or a bracket 530 of FIG. 3) disposed within the housing 410. Here, the "sound channel" or the "sound space" may mean a passage that guides transmission of a sound (sound wave, sound). For example, the sound channel or the sound space may mean a physical space (area, region, volume, or gap). The sound channel or the sound space may include a space filled with a medium (e.g., air) capable of transmitting a sound wave. Hereinafter, a sound being transmitted through a sound channel or a sound space may mean that a sound is transmitted through a specific space.

Hereinafter, the sound space connected to the speaker unit 430 will be described by dividing it into a front sound space (e.g., the first sound channel P1, the second sound channel P2), and the rear sound space P3. In an embodiment, the front sound space may be positioned at the front surface (e.g., +Z direction based on FIG. 6) of the speaker unit 430, and may be a channel connecting the speaker unit 430 and the sound hole 420 in order to transmit the sound output from the speaker unit 430 to the sound hole 420. In an embodiment, the rear sound space P3 may be partially positioned at a rear surface (e.g., -Z direction based on FIG. 6) of the speaker unit 430 and be a space that induces resonance of a sound (e.g., low range sound) output to the speaker unit 430.

According to an embodiment, as illustrated in FIG. 6, a sound output from the speaker unit 430 may be emitted to the sound hole 420 through the front sound space. In an embodiment, the front sound space connecting the speaker unit 430 and the sound hole 420 may be a space formed through the housing 410, the first support member 450, and the first sealing member 510. In an embodiment, with reference to FIGS. 6, 7A, 7B, and 7C, the front sound space may be a space formed by stacking in order of the speaker unit 430, the first sealing member 510, the first support member 450, and the first part 411 of the housing 410. In an embodiment, the front sound space may include a first sound channel P1 and a second sound channel P2 to be described later. The sound output from the speaker unit 430 may be emitted to the outside of the electronic device 400 through the first sound channel P1, the second sound channel P2, and the sound hole 420. A detailed description of the first sound channel P1 and the second sound channel P2 will be described below.

In an embodiment, with reference to FIGS. 6, 7A, 7B, and 7C, at least a portion of the first support member 450 may be positioned in the first part 411 of the housing 410. As described above, the first part 411 may be an injection part of the housing 410 made of a non-metallic material. In an embodiment, the first support member 450 may be spaced apart from the first part 411 of the housing 410 by a predetermined distance in the -Z direction of FIG. 6. A space between the first support member 450 and the first part 411 of the housing 410 may be used as a channel (e.g., the second sound channel P2) for transmitting a sound output from the speaker unit 430 to the sound hole 420. In an embodiment, the first support member 450 may include a first opening 451. The sound output from the speaker unit 430 may be transmitted to the sound hole 420 by passing through a space (e.g., the second sound channel P2) between the first opening 451 - the first support member 450 and the first part 411 of the housing 410.

In an embodiment, the first support member 450 may be made of various materials. For example, the first support member 450 may be made of a metal material or a non-metallic material. In an embodiment, the metal material may include an alloy of aluminum, stainless steel (STS, SUS), iron, magnesium, and/or titanium. The non-metallic material may include a synthetic resin, ceramic, and/or engineering plastic. Further, the first support member 450 may be made of various materials within the range available to those skilled in the art.

In an embodiment, the speaker unit 430 may be positioned in the -Z direction with respect to the first support member 450 based on FIG. 6. The speaker unit 430 may be disposed in the housing 410 so that a sound emission port (not illustrated) is positioned in the first opening 451 of the first support member 450.

In an embodiment, with reference to FIG. 6, a first sealing member 510 may be disposed between the speaker unit 430 and the first support member 450. In an embodiment, the first sealing member 510 may be in the form of a closed loop enclosing the sound emission port of the speaker unit 430 and the first opening 451 of the first support member 450. In an embodiment, the first sealing member 510 may be made of an elastic material such as rubber, urethane and/or rubber, or a soundproofing material. In an embodiment, as an adhesive material is applied to at least one surface of the first sealing member 510, the first sealing member 510 may be adhered to the speaker unit 430 and the first support member 450. In an embodiment, the sound emission port of the speaker unit 430 and the first opening 451 of the first support member 450 may be positioned inside the first sealing member 510. An internal space of the first sealing member 510 may be a first sound channel P1 connecting the sound emission port of the speaker unit 430 and the first opening 451 of the first support member 450. For example, the first sound channel P1 may be a space enclosed by the first sealing member 510. As the first sealing member 510 is in close contact with the speaker unit 430 and the first support member 450, the sound radiated from the sound emission port of the speaker unit 430 may be prevented from being leaked to a space between the speaker unit 430 and the first support member 450. Accordingly, the sound output from the speaker unit 430 may be transmitted to the first opening 451 of the first support member 450 through the first sound channel P1.

In an embodiment, with reference to FIG. 6, as the first support member 450 is spaced apart from the first part 411 of the housing 410 at a predetermined distance, a space may be formed between the first support member 450 and the first part 411. Hereinafter, the space enclosed by the first support member 450 and the housing 410 will be referred to as a second sound channel P2. In an embodiment, the second sound channel P2 may connect the first opening 451 of the first support member 450 and the sound hole 420 formed in the housing 410. In an embodiment, the sound hole 420 may be formed in the first part 411 of the housing 410 so as to face the front surface (e.g., a surface facing the +Z direction based on FIG. 6) of the electronic device 400. Therefore, a sound output from the speaker unit 430 may be emitted to the outside of the electronic device 400 through the first sound channel P1 - the first opening 451 of the first support member 450 - the second sound channel P2 - the sound hole 420.

In an embodiment, with reference to FIGS. 6, 7A, 7B, and 7C, a seating groove 413 in which the first support member 450 is seated (supported, attached, contacted to) may be formed in the first part 411 of the housing 410. In an embodiment, the seating groove 413 may be a concave groove formed to seat the first support member 450 in the first part 411. In an embodiment, a second sound channel P2 positioned between the first part 411 of the housing 410 and the first support member 450 may be a part of a seating groove 413.

In an embodiment, a portion of the first support member 450 may be disposed in the first part 411 of the housing 410, and another portion of the first support member 450 may be disposed in the second part 412 of the housing 410. In an embodiment, at least a portion of the first support member 450 may be disposed in a latch jaw 415 formed in the housing 410. In an embodiment, the first support member 450 may be guided through a short jaw 414 formed in the housing 410 to be seated on the latch jaw 415. As will be described later, a portion of the second sealing member 520 constituting the rear sound space P3 may be disposed in the short jaw 414. In an embodiment, the latch jaw 415 and the short jaw 414 may be part of the first part 411 and/or the second part 412 of the housing 410.

In an embodiment, the first support member 450 may be disposed only in the first part 411 of the housing 410. In this case, a portion of the first support member 450 may be guided through the short jaw 414 positioned in the first part 411 to be seated on the latch jaw 415 positioned in the first part 411.

According to an embodiment, as illustrated in FIG. 6, the electronic device 400 may include a printed circuit board 440 electrically connected to the speaker unit 430. In an embodiment, the printed circuit board 440 may be disposed so that a first surface 4401 (e.g., a surface facing the +Z direction based on FIG. 6) faces the first support member 450 and that a second surface 4402 (e.g., a surface facing the -Z direction based on FIG. 6) faces the rear case 470. In an embodiment, the printed circuit board 440 may enclose a portion of the speaker unit 430. In an embodiment, the printed circuit board 440 may include a second opening 441 that receives the speaker unit 430. The speaker unit 430 may be disposed in the second opening 441; thus, a side area thereof may be enclosed by the printed circuit board 440.

In an embodiment, a bracket 530 covering the second opening 441 may be disposed at the second surface 4402 (e.g., a surface facing the -Z direction based on FIG. 6) of the printed circuit board 440. In an embodiment, the speaker unit 430 may be positioned in a space (e.g., the rear sound space P3, resonance space) formed as the bracket 530 closes the second opening 441. In an embodiment, the bracket 530 may be a shield can (i.e. a shield) made of a metal material. The shield can may shield, reduce or prevent the transmission of electromagnetic waves and/or noise generated in electronic components so that at least some of the electromagnetic waves and/or noise cannot penetrate the shield can. For example, the shield can may shield, reduce or prevent electromagnetic waves and/or noise generated in electronic components disposed in the speaker unit 430 and the printed circuit board 440 so that at least some of the electromagnetic waves and/or noise cannot penetrate the shield can. The shield can shields, prevents or reduces electromagnetic waves and/or noise generated by the speaker unit and the printed circuit board from being transmitted to other components in the electronic device, or to the outside of the electronic device. The shield can also shields, prevents or reduces electromagnetic waves and/or noise generated by components other than the speaker unit and the printed circuit board from being transmitted to the speaker unit and printed circuit board. In an embodiment, the bracket 530 may be made of a non-metallic material such as a synthetic resin, ceramic, and/or engineering plastic.

According to an embodiment, as illustrated in FIGS. 6, 9A, 9B, and 9C, at the first surface 4401 (e.g., a surface facing the +Z direction based on FIG. 6) of the printed circuit board 440, a second sealing member 520 may be disposed. In an embodiment, the second sealing member 520 may have a closed loop shape. In an embodiment, the second sealing member 520 may be made of an elastic material such as rubber, urethane, a soundproofing material, or a combination thereof. In an embodiment, the second sealing member 520 may be adhered to the printed circuit board 440 and the housing 410 by applying an adhesive material to at least one surface thereof. In an embodiment, the second sealing member 520 may be adhered between the printed circuit board 440 and the housing 410 so as to enclose the first sealing member 510 at the outside of the first sealing member 510. In an embodiment, at least a portion of the second sealing member 520 may be positioned in the second part 412 of the housing 410. Another part of the second sealing member 520 may be positioned at the short jaw 414 that guides the first support member 450 to be seated in the seating groove 413.

According to an embodiment, as illustrated in FIG. 6, as the seating groove 413 is formed in the housing 410, a step may occur between the seating groove 413 and another area (e.g., the short jaw 414) of the housing 410. In an embodiment, a first gap L1 between the first support member 450 and the printed circuit board 440 may be wider than a second gap L2 between the short jaw 414 and the printed circuit board 440. As described above, the second sealing member 520 may be disposed in the first surface 4401 of the printed circuit board 440, a portion of the second sealing member 520 may face the first support member 450, and another portion of the second sealing member 520 may be positioned at the short jaw 414 of the housing 410. In this case, a portion of the second sealing member 520 facing the first support member 450 may not be supported by a space corresponding to the difference between the first gap L1 and the second gap L2. According to an embodiment of the disclosure, as illustrated in FIGS. 6, 8A, and 8B, the electronic device 400 may include a second support member 460 that compensates for the difference between the first gap L1 and the second gap L2. In an embodiment, with reference to FIGS. 6 and 8A to 9B, the second support member 460 may be disposed between the first support member 450 and the printed circuit board 440. In an embodiment, the second support member 460 may be disposed in the first support member 450. In an embodiment, a thickness of a portion of the second support member 460 disposed in the first support member 450 (e.g., a length in the Z-axis direction based on FIG. 6) may have a thickness equal to the difference between the first gap L1 and the second gap L2.

In an embodiment, the second support member 460 may be made of various materials. For example, the second support member 460 may be made of a metal material or a non-metallic material. In an embodiment, the metal material may include an alloy of aluminum, stainless steel (STS, SUS), iron, magnesium, and/or titanium. The non-metallic material may include a synthetic resin, ceramic, and/or engineering plastic. Further, the second support member 460 may be made of various materials within the range available to those skilled in the art.

According to an embodiment, as illustrated in FIG. 6, the electronic device 400 may include a rear sound space P3 enclosed by the housing 410, the printed circuit board 440, the bracket 530, the first sealing member 510, and the second sealing member 520. In an embodiment, the second sealing member 520 may block a sound output from the speaker unit 430 from being emitted to the space between the first support member 450 and the printed circuit board 440 and between the housing 410 and the printed circuit board 440. In an embodiment, the rear sound space P3 may be a space in which a sound output from the speaker unit 430 is transmitted. In an embodiment, the rear sound space P3 may improve a sound performance of the speaker unit 430 by inducing resonance of the sound output from the speaker unit 430 within a closed area. For example, a low range sound output from the speaker unit 430 is radiated to a resonance space (e.g., the rear sound space P3) formed in a rear direction of the speaker unit 430, thereby inducing resonance within the closed space and improving a low range sound performance.

According to an embodiment of the disclosure, the electronic device 400 may design the rear sound space P3 through components disposed in the electronic device 400 without a separate space design. In an embodiment, resonance of a sound generated in the speaker unit 430 may be induced through the rear sound space P3 formed by the printed circuit board 440, the bracket 530, the first sealing member 510, and the second sealing member 520. Accordingly, a sound performance of the speaker unit 430 in the low range may be improved.

According to an embodiment, as illustrated in FIG. 6, the electronic device 400 may include a rear case 470 disposed at the rear surface (e.g., the surface facing the -Z direction based on FIG. 6) thereof and a rear cover 480 (e.g., the rear plate 380 of FIG. 3) for covering the rear case 470 at the rear surface thereof and constituting an appearance thereof. In an embodiment, the rear case 470 may include a side wall part 471 positioned at the side surface of the electronic device 400. In an embodiment, at least a portion of the second support member 460 may be disposed in the side wall part 471.

In the above description, it has been described that the bracket 530 is disposed in the printed circuit board 440 to cover the second opening 441, but the disclosure may not be limited thereto. In an embodiment, the bracket 530 may be formed in various shapes. In an embodiment, the bracket 530 may be part of the rear case 470. For example, the bracket 530 may be extended from one surface of the rear case 470 toward the printed circuit board 440 to enclose the second opening 441 of the printed circuit board 440. In this structure, the rear sound space P3 may be formed by being enclosed by the rear case 470, the support part, the printed circuit board 440, the first sealing member 510, and the second sealing member 520.

Further, in the above description, the description was made on the assumption that the second support member 460 is disposed in the housing 410. However, in the case that the first gap L1 between the first support member and the printed circuit board 440 and the second gap L2 between the short jaw 414 of the housing 410 and the printed circuit board 440 are the same, a second support member 460 that compensates for the difference between the first gap L1 and the second gap L2 may not be separately required. In this case, the second sealing member 520 may be adhered to the first surface 4401 of the printed circuit board 440, the housing 410, and the first support member 450 so as to enclose the second opening 441 of the printed circuit board 440 at the outside of the first sealing member 510. In this case, the electronic device 400 may not include the second support member 460 but may form a rear sound space P3. For example, the electronic device 400 may form a rear sound space P3 through the bracket 530, the printed circuit board 440, the first support member 450, the first sealing member 510, and the second sealing member 520.

According to an embodiment of the disclosure, the speaker unit 430 may be positioned at the first part 411 made of a non-metallic material of the housing 410. In the case that the speaker unit 430 is disposed in the first part 411 of the housing 410, the first support member 450 and the first sealing member 510 are disposed between the first part 411 and the speaker unit 430, thereby forming a first sound channel P1 that transmits a sound output from the speaker unit 430 to the sound hole 420 communicated with the outside of the electronic device 400. Further, in an embodiment, the speaker unit 430 may be disposed inside a sealed resonance space through the printed circuit board 440 and the bracket 530 (e.g., shield can). The speaker unit 430 may improve sound flatness and sound quality in a low range by securing a resonance space. Further, as the resonance space is secured through components disposed inside the electronic device 400, as in the printed circuit board 440 and the bracket 530, a separate device object (e.g., the speaker housing 410) for forming the resonance space is not required; thus, a production cost of the electronic device 400 may be saved. Further, in an embodiment, the electronic device 400 can secure a stereo performance and a predetermined level of sound performance by disposing the speaker units 430 at the upper end and the lower end, respectively.

According to an embodiment of the disclosure, the electronic device 400 (e.g., the electronic device 101 of FIG. 1 and/or the electronic device 200 of FIG. 2A) may include a housing 410 (e.g., the housing 210 of FIG. 2A) positioned at a front surface thereof and including a first part 411 made of a non-metallic material; a first support member 450 disposed in the housing and including a first opening 451 having at least a portion facing the first part; a speaker unit 440 (e.g., the sound output module 155 of FIG. 1 and/or the sound output device 214 of FIG. 2A) disposed in the housing and configured to face the first opening of the first support member; a sound hole 420 formed in the housing to emit a sound output to the speaker unit; a first sealing member 510 disposed between the first support member and the speaker unit and configured to enclose a sound emission port of the speaker unit and the first opening of the first support member; a first sound channel P1 formed by being enclosed by the first sealing member and configured to connect the first opening and the speaker unit; and a second sound channel P2 positioned between the first support member and the first part and configured to connect the first opening and the sound hole.

Further, the electronic device may further include a printed circuit board 440 (e.g., the substrate 340 of FIG. 3) including a second opening 441 into which at least a portion of the speaker unit is inserted, and electrically connected to the speaker unit; and a second sealing member 520 positioned outside the first sealing member and disposed between a first surface 4401 of the printed circuit board and the housing so as to enclose the second opening of the printed circuit board.

Further, the electronic device may further include a second support member 460 disposed in the first support member and adhered to the second sealing member.

Further, in the second support member, a thickness of a portion positioned between the first support member and the second sealing member may be formed in a length equal to a difference between a first gap L1 between the printed circuit board and the first support member and a second gap L2 between a portion of the housing in which the second sealing member is disposed and the printed circuit board.

Further, the housing may include a second part 412 adjacent to the first part, and at least a portion of the second sealing member may be adhered to the second part.

Further, the electronic device may further include a bracket 530 disposed at a second surface 4402 of the printed circuit board and configured to cover the speaker unit and to shield the second opening of the printed circuit board; and a rear sound space P3 enclosed by the printed circuit board, the bracket, the first sealing member, and the second sealing member.

Further, the bracket may be made of a metal material to block electromagnetic waves and noise.

Further, the first part may include a seating groove 413 in which the first support member is seated.

Further, the second sound channel may be a part of the seating groove.

Further, the housing may include a second part 412 adjacent to the first part, and a part of the second sealing member may be adhered to the first part, and the other part thereof may be adhered to the second part.

Further, the sound hole may be formed in the first part to be positioned at a front surface of the electronic device.

Further, the electronic device may further include a rear case 470 including a side wall part 471 positioned toward a side surface thereof and having at least portion positioned at a rear surface thereof.

Further, at least a portion of the second support member may be disposed in the side wall part.

Further, the electronic device may further include a support part extended from one surface of the rear case toward the second surface of the printed circuit board to enclose the second opening; and a rear sound space P3 enclosed by the rear case, the support part, the printed circuit board, the first sealing member, and the second sealing member.

According to an embodiment of the disclosure, a speaker structure disposed in a housing 410 (e.g., the housing 210 of FIG. 2A) of an electronic device 400 (e.g., the electronic device 101 of FIG. 1, the electronic device 200 of FIG. 2A) may include a first support member 450 positioned at a front surface of the electronic device and including a first opening 451 facing a first part 411 of the housing made of a non-metallic material; a speaker unit 430 (e.g., the sound output module 155 of FIG. 1 and/or the sound output device 214 of FIG. 2A) configured to face the first opening of the first support member; a first sealing member 510 disposed between the first support member and the speaker unit and configured to enclose a sound emission port of the speaker unit and the first opening of the first support member; a first sound channel P1 formed by being enclosed by the first sealing member and configured to connect the first opening and the speaker unit; and a second sound channel P2 positioned between the first support member and the first part and configured to connect the first opening and a sound hole 420 formed in the housing.

Further, the speaker structure may further include a printed circuit board 340 or 440 including a second opening 441 into which at least a portion of the speaker unit is inserted, and electrically connected to the speaker unit; and

A second sealing member 520 positioned outside the first sealing member and disposed between the first surface 4401 of the printed circuit board and the housing so as to enclose the second opening of the printed circuit board.

Further, the speaker structure may further include a second support member 460 disposed in the first support member and adhered to the second sealing member.

Further, in the second support member, a thickness of a portion positioned between the first support member and the second sealing member may be formed in a length equal to a difference between a first gap L1 between the printed circuit board and the first support member and a second gap L2 between a portion of the housing in which the second sealing member is disposed and the printed circuit board.

Further, the speaker structure may further include a bracket 530 disposed at a second surface 4402 of the printed circuit board and configured to cover the speaker unit and to shield a second opening of the printed circuit board; and a rear sound space P3 enclosed by the printed circuit board, the bracket, the first sealing member, and the second sealing member.

Further, the speaker structure may further include a rear case 470 having at least a portion positioned at a rear surface of the electronic device; a support part extended from one surface of the rear case toward a second surface 4402 of the printed circuit board to enclose the second opening; and a rear sound space P3 enclosed by the rear case, the support part, the printed circuit board, the first sealing member, and the second sealing member.

An electronic device according to various embodiments disclosed in this document may be various types of devices. The electronic device may include, for example, a portable communication device (e.g., smart phone), a computer device, a portable multimedia device, a portable medical device, a camera, a wearable device, or a home appliance device. The electronic device according to the embodiment of this document is not limited to the above-described devices.

It should be understood that various embodiments of this document and terms used therein are not intended to limit the technical features described in this document to specific embodiments, but include various modifications, equivalents, or substitutions of the embodiments. In connection with the description of the drawings, like reference numerals may be used for similar or related components. The singular form of the noun corresponding to the item may include one or more of the item, unless the relevant context clearly dictates otherwise. In this document, each of phrases such as "A or B", "at least one of A and B", "at least one of A or B", "A, B, or C", "at least one of A, B and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively, it means that the one component may be connected to the other component directly (e.g., by wire), wirelessly, or through a third component.

The term "module" used in various embodiments of this document may include a unit implemented in hardware, software, or firmware, and may be used interchangeably with terms such as, for example, logic, logic block, part, or circuit. The module may be an integrally formed part or a minimum unit or a portion of the part that performs one or more functions. For example, according to an embodiment, the module may be implemented in the form of an application-specific integrated circuit (ASIC).

Various embodiments of this document may be implemented into software (e.g., the program 140) including one or more instructions stored in a storage medium (e.g., the internal memory 136 or the external memory 138) readable by a machine (e.g., the electronic device 101). For example, the processor (e.g., the processor 120) of the device (e.g., the electronic device 101) may call and execute at least one command among one or more stored instructions from a storage medium. This makes it possible for the device to be operated to perform at least one function according to the called at least one instruction. The one or more instructions may include a code generated by a compiler or a code executable by an interpreter. The device-readable storage medium may be provided in the form of a non-transitory storage medium. Here, 'non-transitory' only means that the storage medium is a tangible device and does not include a signal (e.g., electromagnetic wave), and this term does not distinguish the case that data is semi-permanently stored in the storage medium and the case that data is temporary stored.

According to an embodiment, a method according to various embodiments disclosed in this document may be provided as included in a computer program product. Computer program products may be traded between sellers and buyers as commodities. The computer program product may be distributed in the form of a machine-readable storage medium (e.g., compact disc read only memory (CD-ROM)), or via an application store (e.g., Play Store^{™}) or may be distributed (e.g., download or upload) online or directly between two user devices (e.g., smartphones). In the case of online distribution, at least a part of the computer program product may be at least temporarily stored or temporarily generated in a machine-readable storage medium such as a memory of a server of a manufacturer, a server of an application store, or a relay server.

According to various embodiments, each component (e.g., module or program) of the above-described components may include a singular or a plurality of entities, and some of the plurality of entities may be separately disposed in other components. According to various embodiments, one or more components or operations among the above-described corresponding components may be omitted, or one or more other components or operations may be added. Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration. According to various embodiments, operations performed by a module, program, or other component may be executed sequentially, in parallel, repeatedly, or heuristically, or one or more of the operations may be executed in a different order, or omitted, or one or more other operations may be added.

It will be understood that the disclosure contemplates and includes, in addition to the above-disclosed embodiments, embodiments based on combinations of any two or more of the above-disclosed embodiments and embodiments including any combination of the above features. That is, the absence of explicit indication that two features may be combined or two embodiments may be combined does not mean that such combinations are not contemplated, but such combinations should be regarded as included herein.

## Claims

1. An electronic device (101, 200, 400) comprising:
a housing (210, 410) positioned at a front surface thereof and including a first part 411 comprising a non-metallic material;
a first support member 450 disposed in the housing and including a first opening 451 having at least a portion facing the first part 411;
a speaker unit (155, 214, 440) disposed in the housing and configured to face the first opening of the first support member,
a sound hole 420 disposed in the housing to emit a sound output by the speaker unit;
a first sealing member 510 disposed between the first support member and the speaker unit and configured to enclose the sound emission port of the speaker unit and the first opening of the first support member;
a first sound channel P1 formed by being enclosed by the first sealing member and configured to connect the first opening and the speaker unit; and
a second sound channel P2 positioned between the first support member and the first part and configured to connect the first opening and the sound hole.

2. The electronic device of claim 1, further comprising:
a printed circuit board (340, 440) including a second opening 441 into which at least a portion of the speaker unit is inserted and electrically connected to the speaker unit; and
a second sealing member 520 positioned outside the first sealing member and disposed between a first surface 4401 of the printed circuit board and the housing so as to enclose the second opening of the printed circuit board.

3. The electronic device of claim 2, further comprising a second support member 460 disposed in the first support member and adhered to the second sealing member.

4. The electronic device of claim 3, wherein in the second support member, a thickness of a portion positioned between the first support member and the second sealing member has a length equal to a difference between a first gap L1 between the printed circuit board and the first support member and a second gap L2 between a portion of the housing in which the second sealing member is disposed and the printed circuit board.

5. The electronic device of claim 3, wherein the housing comprises a second part 412 adjacent to the first part, and
at least a portion of the second sealing member is adhered to the second part.

6. The electronic device of claim 3, further comprising:
a bracket 530 disposed at a second surface 4402 of the printed circuit board and configured to cover the speaker unit and to shield the second opening of the printed circuit board; and
a rear sound space P3 enclosed by the printed circuit board, the bracket, the first sealing member, and the second sealing member.

7. The electronic device of claim 6, wherein the bracket is made of a metal material.

8. The electronic device of claim 1, wherein the first part comprises a seating groove 413 in which the first support member is seated.

9. The electronic device of claim 8, wherein the second sound channel is a part of the seating groove.

10. The electronic device of claim 2, wherein the housing comprises a second part 412 adjacent to the first part, and
a part of the second sealing member is adhered to the first part, and the other part of the second sealing member is adhered to the second part.

11. The electronic device of claim 1, wherein the sound hole is formed in the first part to be positioned at the front surface of the electronic device.

12. The electronic device of claim 3, further comprising a rear case 470 including a side wall part 471 positioned toward a side surface thereof and having at least a portion positioned at a rear surface thereof.

13. The electronic device of claim 12, wherein at least a portion of the second support member is disposed in the side wall part.

14. The electronic device of claim 12, further comprising:
a support part extended from one surface of the rear case toward the second surface of the printed circuit board to enclose the second opening; and
a rear sound space P3 enclosed by the rear case, the support part, the printed circuit board, the first sealing member, and the second sealing member.
